(19) Europäisches Patentamt
European Patent Office
Office européen des brevets

(11) **EP 2 610 172 B1**

(12) **EUROPEAN PATENT SPECIFICATION**

(45) Date of publication and mention of the grant of the patent:
**18.11.2015 Bulletin 2015/47**

(51) Int Cl.:
***B64C 27/00*** (2006.01)  ***F16F 13/24*** (2006.01)

(21) Application number: **12153367.3**

(22) Date of filing: **31.01.2012**

(54) **System and method of tuning a liquid inertia vibration eliminator**

System und Verfahren zum Einstellen eines Flüssigkeitsträgheitsschwingungseliminators

Système et procédé de réglage d'un éliminateur de vibrations par inertie de liquide

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2011 US 201113337222**

(43) Date of publication of application:
**03.07.2013 Bulletin 2013/27**

(73) Proprietor: **Bell Helicopter Textron Inc.**
**Fort Worth, TX 76101 (US)**

(72) Inventors:
• **Griffin, Maurice D**
  **Euless, TX Texas 76040 (US)**

• **Hemmen, Scott**
  **Hurst, TX Texas 76053 (US)**
• **Ledbetter, Matt**
  **Arlington, TX Texas 76006 (US)**

(74) Representative: **Lawrence, John**
  **Barker Brettell LLP**
  **100 Hagley Road**
  **Edgbaston**
  **Birmingham B16 8QQ (GB)**

(56) References cited:
  **DE-A1- 2 621 725**  **US-A- 5 704 596**
  **US-A- 6 009 983**  **US-A1- 2009 289 472**
  **US-A1- 2010 301 160**  **US-B2- 6 695 106**

**Description**

**BACKGROUND**

**Technical Field:**

The present invention relates in general to vibration control. More specifically, the present invention relates to methods and apparatus for isolating mechanical vibrations in structures or bodies that are subject to harmonic or oscillating displacements or forces. The present invention is well suited for use in the field of aircraft, in particular, helicopters and other rotary wing aircraft.

**Description of Related Art:**

For many years, effort has been directed toward the design of an apparatus for isolating a vibrating body from transmitting its vibrations to another body. Such apparatuses are useful in a variety of technical fields in which it is desirable to isolate the vibration of an oscillating or vibrating device, such as an engine, from the remainder of the structure. Typical vibration isolation and attenuation devices ("isolators") employ various combinations of the mechanical system elements (springs and mass) to adjust the frequency response characteristics of the overall system to achieve acceptable levels of vibration in the structures of interest in the system. One field in which these isolators find a great deal of use is in aircraft, wherein vibration-isolation systems are utilized to isolate the fuselage or other portions of an aircraft from mechanical vibrations, such as harmonic vibrations, which are associated with the propulsion system, and which arise from the engine, transmission, and propellers or rotors of the aircraft.

Vibration isolators are distinguishable from damping devices in the prior art that are erroneously referred to as "isolators." A simple force equation for vibration is set forth as follows:

$$F = m\ddot{x} + c\dot{x} + kx$$

A vibration isolator utilizes inertial forces ($m\ddot{x}$) to cancel elastic forces ($kx$). On the other hand, a damping device is concerned with utilizing dissipative effects ($c\dot{x}$) to remove energy from a vibrating system.

One important engineering objective during the design of an aircraft vibration-isolation system is to minimize the length, weight, and overall size including cross-section of the isolation device. This is a primary objective of all engineering efforts relating to aircraft. It is especially important in the design and manufacture of helicopters and other rotary wing aircraft, such as tilt rotor aircraft, which are required to hover against the dead weight of the aircraft, and which are, thus, somewhat constrained in their payload in comparison with fixed-wing aircraft.

Another important engineering objective during the design of vibration-isolation systems is the conservation of the engineering resources that have been expended in the design of other aspects of the aircraft or in the vibration-isolation system. In other words, it is an important industry objective to make incremental improvements in the performance of vibration isolation systems which do not require radical re-engineering or complete redesign of all of the components which are present in the existing vibration-isolation systems.

A marked departure in the field of vibration isolation, particularly as applied to aircraft and helicopters is disclosed in U.S. Pat. No. 4,236,607, titled "Vibration Suppression System," issued 2 December 1980, to Halwes, et al. (Halwes '607). Halwes '607 discloses a vibration isolator, in which a dense, low-viscosity fluid is used as the "tuning" mass to counterbalance, or cancel, oscillating forces transmitted through the isolator. This isolator employs the principle that the acceleration of an oscillating mass is 180° out of phase with its displacement.

In Halwes '607, it was recognized that the inertial characteristics of a dense, low-viscosity fluid, combined with a hydraulic advantage resulting from a piston arrangement, could harness the out-of-phase acceleration to generate counterbalancing forces to attenuate or cancel vibration. Halwes '607 provided a much more compact, reliable, and efficient isolator than was provided in the prior art. The original dense, low-viscosity fluid contemplated by Halwes '607 was mercury, which is toxic and highly corrosive.

Since Halwes' early invention, much of the effort in this area has been directed toward replacing mercury as a fluid or to varying the dynamic response of a single isolator to attenuate differing vibration modes. An example of the latter is found in U.S. Pat. No. 5,439,082, titled "Hydraulic Inertial Vibration Isolator," issued 8 August 1995, to McKeown, et al. (McKeown '082).

Several factors affect the performance and characteristics of the Halwes-type isolator, including the density and viscosity of the fluid employed, the relative dimensions of components of the isolator, and the like. One improvement in the design of such isolators is disclosed in U.S. Patent No. 6,009,983, titled "Method and Apparatus for Improved Isolation," issued 4 January 2000, to Stamps et al. (Stamps '983). In Stamps '983, a compound radius at the each end of the tuning passage was employed to provide a marked improvement in the performance of the isolator. Stamps '983 is incorporated herein by reference.

Another area of improvement in the design of the Halwes-type isolator has been in an effort directed toward a means for changing the isolator's frequency in order to increase the isolator's effectiveness during operation. One development in the design of such isolators is disclosed in U.S. Patent No. 5,435,531, titled "Vibration Isolation System," issued 25 July 1995, to Smith et al. (Smith '531). In Smith '531, an axially extendable sleeve is used in the inner wall of the tuning passage in order to change the length of the tuning passage, thereby changing the isolation frequency. Another development in the design of tunable Halwes-type isolators was disclosed in U.S. Patent No. 5,704,596, titled "Vibration Isolation System," issued 6 January 1998, to Smith et al. (Smith '596). In Smith '596, a sleeve is used in the inner wall of the tuning passage in order to change the cross sectional area of the tuning passage itself, thereby changing the isolation frequency during operation. Both Smith '531 and Smith '596 were notable attempts to actively tune the isolator.

Another development in the area of vibration isolation is the tunable vibration isolator disclosed in U.S. Pat. No. 6,695,106, titled "Method and Apparatus for Improved Vibration Isolation," issued 24 February 2004, to Smith et al, which is hereby incorporated by reference.

A suspension mount for a construction vehicle cab is described in U.S. Patent Publication No: 2009/0289472 to Catanzarite et al.

Although the foregoing developments represent great strides in the area of vibration isolation, many shortcomings remain.

## Description of the Drawings

The novel features believed characteristic of the embodiments of the present invention are set forth in the appended claims. However, the embodiments themselves, as well as a preferred mode of use, and further objectives and advantages thereof, will best be understood by reference to the following detailed description when read in conjunction with the accompanying drawings, wherein:

Figure 1 is a perspective view of a helicopter;

Figure 2A is a plan view of a tilt rotor aircraft in an airplane mode;

Figure 2B is a perspective view of a tilt rotor aircraft in a helicopter mode;

Figure 3 is a perspective view of a quad tilt rotor aircraft in an airplane mode; Figure 4 is a perspective view of a vibration isolator according to the preferred embodiment of the present invention;

Figure 5 is a front view of the vibration isolator according to the preferred embodiment of the present invention;

Figure 6 is a cross-sectional view of the vibration isolator, taken from section lines VI-VI in Figure 5, according to the preferred embodiment of the present invention;

Figure 7 is a mechanical equivalent force diagram of the vibration isolator of Figures 4-6; and

Figure 8 is a schematic diagram of a method for optimizing the isolation frequency of a vibration isolator, according to an embodiment of the present invention.

## Description of the Preferred Embodiment

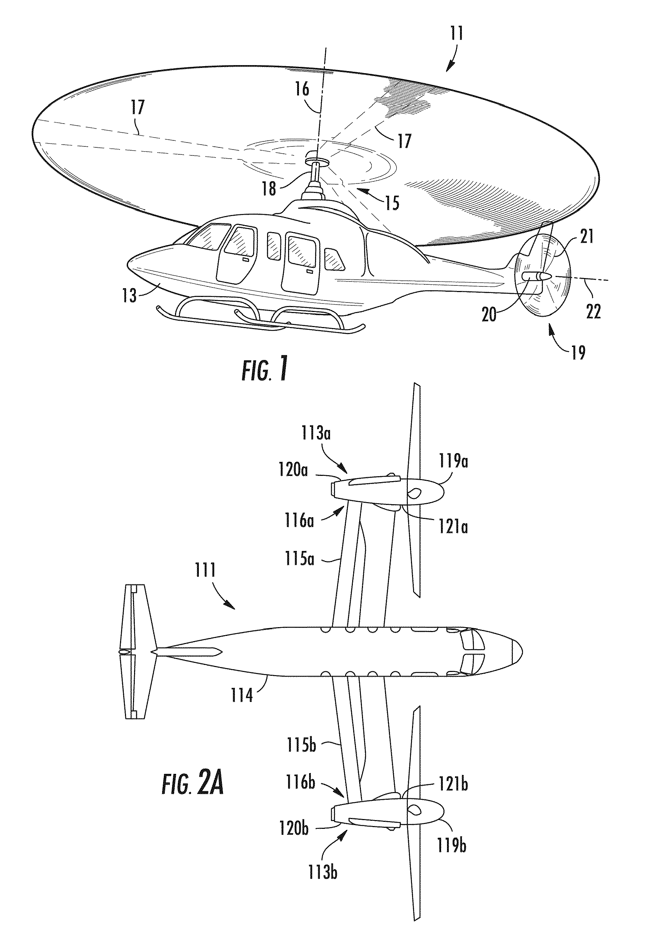

Referring to Figure 1 in the drawings, a helicopter 11 according to the present invention; is illustrated. Helicopter 11 has a fuselage 13 and a main rotor assembly 15, including main rotor blades 17 and a main rotor shaft 18. Helicopter 11 has a tail rotor assembly 19, including tail rotor blades 21 and a tail rotor shaft 20. Main rotor blades 17 generally rotate about a vertical axis 16 of main rotor shaft 18. Tail rotor blades 21 generally rotate about a lateral axis 22 of tail rotor shaft 20. Helicopter 11 also includes a vibration isolation system according to the present invention for isolating fuselage 13 or other portions of helicopter 11 from mechanical vibrations, such as harmonic vibrations, which are associated with the propulsion system and which arise from the engine, transmission, and rotors of helicopter 11.

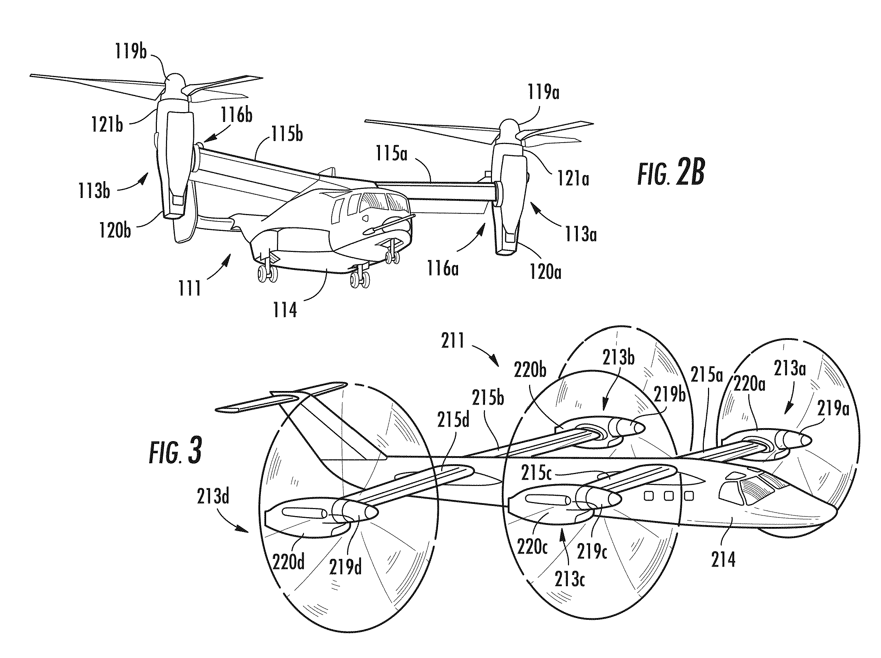

The system of the present invention may also be utilized on other types of rotary wing aircraft. Referring now to Figures 2A and 2B in the drawings, a tilt rotor aircraft 111 is illustrated. As is conventional with tilt rotor aircraft, rotor assemblies 113a and 113b are carried by wings 115a and 115b, and are disposed at end portions 116a and 116b of wings 115a and 115b, respectively. Tilt rotor assemblies 113a and 113b include nacelles 120a and 120b, which carry the engines and transmissions of tilt rotor aircraft 111, as well as, rotor hubs 119a and 119b on forward ends 121a and 121b of tilt rotor assemblies 113a and 113b, respectively.

Tilt rotor assemblies 113a and 113b move or rotate relative to wing members 115a and 115b between a helicopter mode in which tilt rotor assemblies 113a and 113b are tilted upward, such that tilt rotor aircraft 111 flies like a conventional helicopter; and an airplane mode in which tilt rotor assemblies 113a and 113b are tilted forward, such that tilt rotor aircraft 111 flies like a conventional propeller driven aircraft. In Figure 2A, tilt rotor aircraft 111 is shown in the airplane mode; and in Figure 2B, tilt rotor aircraft 111 is shown in the helicopter mode. As shown in Figures 2A and 2B, wings 115a and 115b are coupled to a fuselage 114. Tilt rotor aircraft 111 also includes a vibration isolation system according to the present invention for isolating fuselage 114 or other portions of tilt rotor aircraft 111 from mechanical vibrations, such as harmonic vibrations, which are associated with the propulsion system and which arise from the engines, transmissions, and rotors of tilt rotor aircraft 111.

Referring now to Figure 3 in the drawings, a quad tilt rotor aircraft 211 is illustrated. As with the tilt rotor aircraft 111 of Figures 2A and 2B, rotor assemblies 213a, 213b, 213c, and 213d are carried by a forward wing 215a, 215c, and an aft wing 215b, 215d, respectively. Tilt rotor assemblies 213a, 213b, 213c, and 213d include nacelles 220a, 220b, 220c, and 220d, which carry the engines and transmissions of quad tilt rotor aircraft 211, as well as, rotor hubs 219a, 219b, 219c, and 219d on forward ends of tilt rotor assemblies 213a, 213b, 213c, and 213d, respectively.

Tilt rotor assemblies 213a, 213b, 213c, and 213d move or rotate relative to wing members 215a, 215b, 215c, and 215d between a helicopter mode in which tilt rotor assemblies 213a, 213b, 213c, and 213d are tilted upward, such that quad tilt rotor aircraft 211 flies like a conventional helicopter; and an airplane mode in which tilt rotor assemblies 213a, 213b, 213c, and 213d are tilted forward, such that quad tilt rotor aircraft 211 flies like a conventional propeller driven aircraft. In Figure 3, quad tilt rotor aircraft 111 is shown in the airplane mode. As shown in Figure 3, wings 215a, 215b, 215c, and 215d are coupled to a fuselage 214. Tilt rotor aircraft 211 also includes a vibration isolation system according to the present invention for isolating fuselage 214 or other portions of quad tilt rotor aircraft 211 from mechanical vibrations, such as harmonic vibrations, which are associated with the propulsion system and which arise from the engines, transmissions, and rotors of quad tilt rotor aircraft 211. It should be understood that the system of the present invention may be used with any aircraft on which it would be desirable to have vibration isolation, including unmanned aerial vehicles that are remotely piloted.

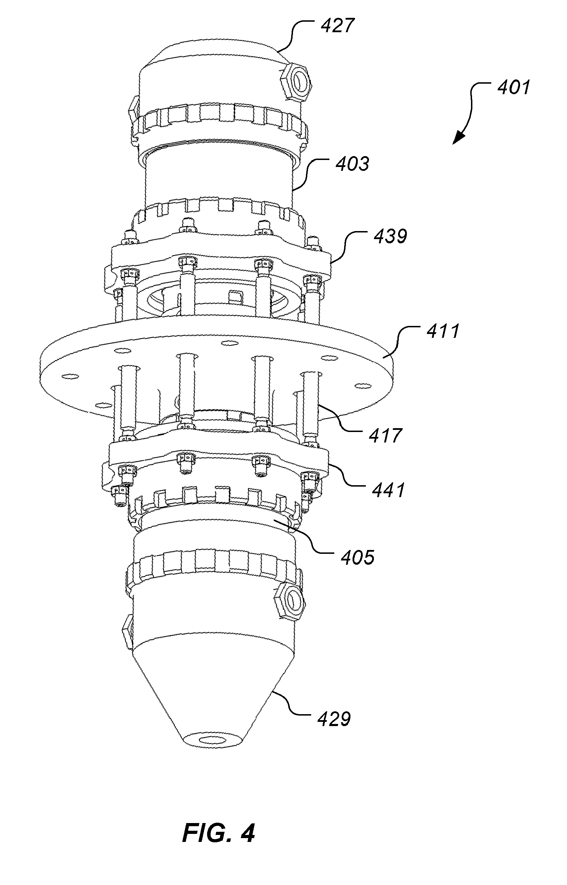

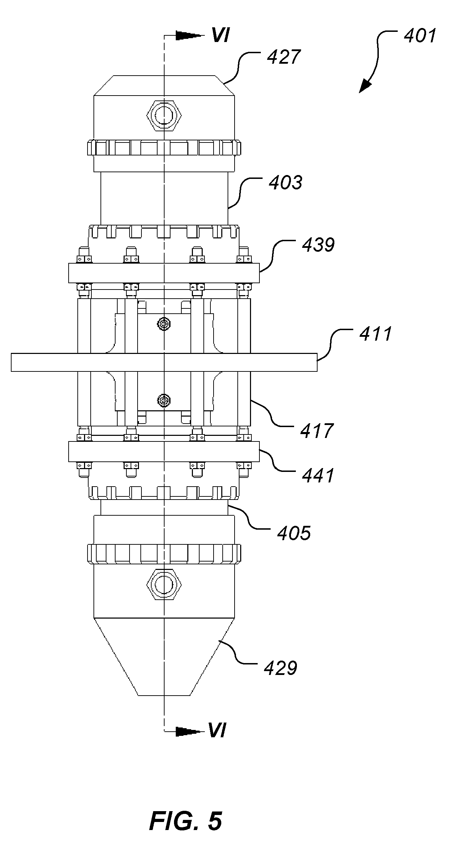

Referring now to Figures 4-6, a vibration isolator 401 according to the present invention is illustrated. Isolator 401 comprises an upper housing 403 and a lower housing 405. An upper reservoir housing 427 and a lower reservoir housing 429 are coupled to end portions of upper housing 403 and a lower housing 405, respectively. Each upper reservoir housing 427 and a lower reservoir housing 429 define an upper fluid chamber 407 and a lower fluid chamber 409, respectively. A piston spindle 411 includes a cylindrical portion that is at least partially disposed within the interior of upper housing 403 and lower housing 405. A plurality of studs 417 rigidly couple together upper housing 403 and a lower housing 405 via an upper ring 439 and a lower ring 441, respectively, so that upper housing 403 and lower housing 405 function as a single rigid body. Studs 417 extend through piston spindle 411 through apertures sized to prevent any contact between studs 417 and piston spindle 411 during operation. Further, piston spindle 411 is resiliently coupled to upper housing 403 and lower housing 405 via an upper elastomer member 413 and a lower elastomer member 415, respectively.

Piston spindle 411 is preferably coupled to a vibrating body, such as a transmission of an aircraft via a pylon assembly. Either upper housing 403 or lower housing 405 can be coupled to a body to be isolated from vibration, such as a roof beam of an airframe of an aircraft. In such an arrangement, the airframe serves as the body to be isolated from vibration, and the transmission of the aircraft serves as the vibrating body. It should be appreciated that other portions of vibration isolator 401 can be coupled to the body to be isolated from vibration. For example, upper ring 439, lower ring 441, upper reservoir housing 427, and lower reservoir housing 429 also can be used as attachment locations for the body to be isolated from vibration.

Upper elastomer member 413 and lower elastomer member 415 seal and resiliently locate piston spindle 411 within the interior upper housing 403 and lower housing 405. Upper elastomer member 413 and lower elastomer member 415 function at least as a spring to permit piston spindle 411 to move or oscillate relative to upper housing 403 and lower housing 405. Upper elastomer member 413 and lower elastomer member 415 can be a solid elastomer member, or alternatively can be alternating layers of non-resilient shim members and elastomer layers.

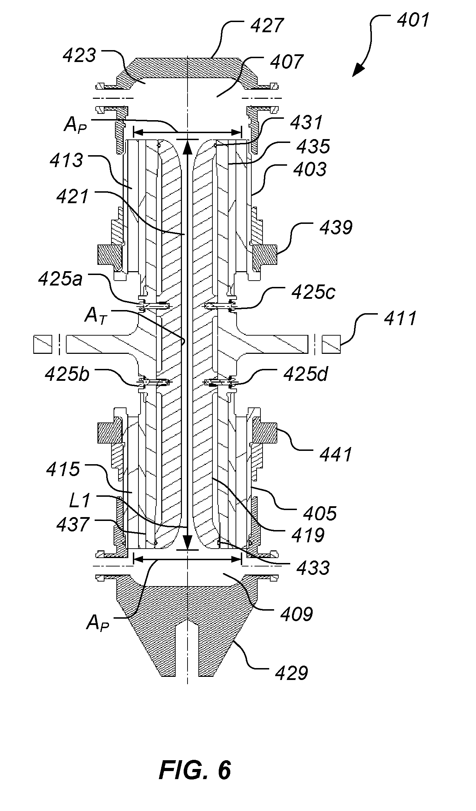

Isolator 401 further includes an inertia track 419 that defines a tuning passage 421. Tuning passage 421 axially extends through inertia track 419 to provide for fluid communication between upper fluid chamber 407 and lower fluid chamber 409. The approximate length of tuning passage 421 preferably coincides with the length of inertia track 419, and is further defined by L1 in Figure 6. Tuning passage 421 is generally circular in cross-section and can be partially tapered longitudinally in order to provide efficient fluid flow.

A tuning fluid 423 is disposed in upper fluid chamber 407, lower fluid chamber 409, and tuning passage 421. Tuning fluid 423 preferably has low viscosity, relatively high density, and non-corrosive properties. For example, tuning fluid 423 may be a proprietary fluid, such as SPF I manufactured by LORD CORPORATION. Other embodiments may incorporate hydraulic fluid having suspended dense particulate matter, for example.

The introduction of a force into piston spindle 411 translates piston spindle 411 and inertia track 419 relative to upper housing 403 and lower housing 405. Such a displacement of piston spindle 411 and inertia track 419 forces tuning fluid 423 to move through tuning passage 421 in the opposite direction of the displacement of piston spindle 411 and inertia track 419. Such a movement of tuning fluid 423 produces an inertial force that cancels, or isolates, the force from piston spindle 411. During typical operation, the force imparted on piston spindle 411 is oscillatory; therefore, the inertial force of tuning fluid 423 is also oscillatory, the oscillation being at a discrete frequency, i.e., isolation frequency.

The isolation frequency ($f_i$) of vibration isolator 401 can be represented by the following equation:

$$f_i = \frac{1}{2\pi} \sqrt{\frac{K}{R(R-1)m_t}}$$

In the above equation, $R$ represents the ratio of the functional area $A_p$ of piston spindle 411 to the total area $A_T$ inside the tuning passage 421. As such, $R = A_p/A_T$

Mass of tuning fluid 423 is represented by $m_t$. The combined spring rate of elastomer members 413 and 415 is represented by $K$.

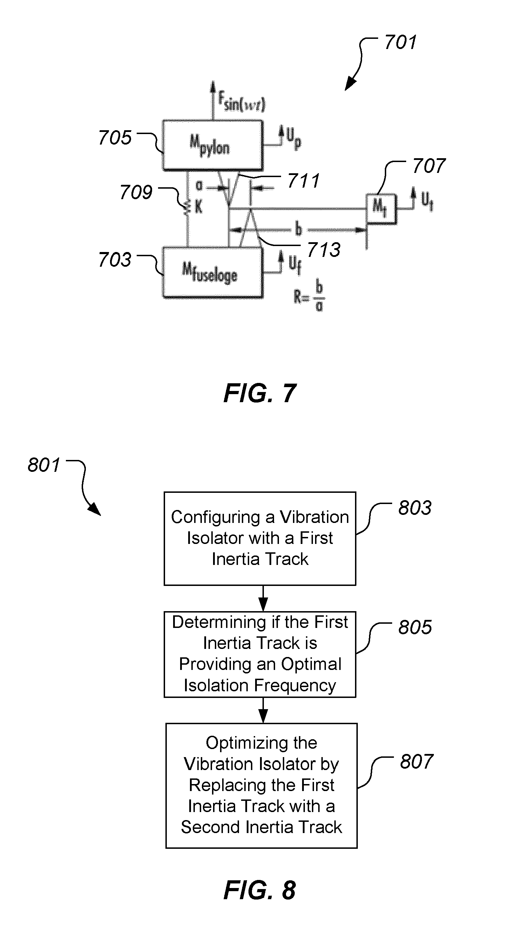

Referring briefly to Figure 7 in the drawings, a mechanical equivalent model 701 for vibration isolator 401 of Figures 4-6 is illustrated. In mechanical equivalent model 701, a box 703 represents the mass of the fuselage $M_{fuselage}$; a box 705 represents the mass of the pylon assembly $M_{pylon}$; and a box 707 represents the mass of the tuning mass $M_t$, in this case, the mass of tuning fluid 423. A vibratory force $F \cdot \sin(\omega t)$ is generated by the transmission and propulsion system. Force $F \cdot \sin(\omega t)$ is a function of the frequency of vibration of the transmission and propulsion system.

Force $F \cdot \sin(\omega t)$ causes an oscillatory displacement $u_p$ of the pylon assembly; an oscillatory displacement of the fuselage $u_f$; and an oscillatory displacement of the tuning mass $u_t$. Elastomer members 413 and 415 are represented by a spring 709 disposed between the fuselage $M_{fuselage}$ and the pylon assembly $M_{pylon}$. Spring 709 has a spring constant K.

In mechanical equivalent model 701, tuning mass $M_t$ functions as if cantilevered from a first fulcrum 711 attached to the pylon assembly $M_{pylon}$, and a second fulcrum 713 attached to the fuselage $M_{fuselage}$. The distance a from first fulcrum 711 to second fulcrum 713 represents the cross-sectional area of tuning passage 421, and the distance b from first fulcrum 711 to the tuning mass $M_t$ represents the effective cross-sectional area of piston spindle 411, such that an area ratio, or hydraulic ratio, R is equal to the ratio of b to a. Mechanical equivalent model 701 leads to the following equation of motion for the system:

$$\begin{bmatrix} M_{pylon} + (R-1)^2 M_t & -R(R-1)M_t \\ -R(R-1)M_t & M_{fuselage} + R^2 M_t \end{bmatrix} \begin{Bmatrix} \ddot{u}_p \\ \ddot{u}_f \end{Bmatrix} + \begin{bmatrix} K & -K \\ -K & K \end{bmatrix} \begin{Bmatrix} u_p \\ u_f \end{Bmatrix} = \begin{Bmatrix} F\sin(\omega t) \\ 0 \end{Bmatrix}$$

As is evident, no means for actively tuning vibration isolator 401 is available. Once the cross-sectional areas of tuning passage 421 and piston spindle 411 are determined, and the tuning fluid is chosen, the operation of vibration isolator 401 is set. However, vibration isolator 401 is uniquely configured such that the isolation frequency can be selectively altered and optimized by the removing and replacing inertia track 419 with another inertia track 419 having a different diameter tuning passage 421. As such, vibration isolator 401 is uniquely adaptable to treat a variety of isolation frequencies, as well as being adaptable for variances in stiffness $K$ of upper and lower elastomer members 413 and 415.

Referring again to Figures 4-6, inertia track 419 is configured to be removable from vibration isolator 401 by removing fasteners 425a-425d. Each fastener 425a-425d threadingly engages a threaded insert located in inertia track 419. In the preferred embodiment, lower reservoir housing 429 is removed from lower housing 405 so that inertia track 419 can be removed. Inertia track 419 can then be replaced with another inertia track 419 having a larger or smaller tuning passage 421. The exact size of the tuning passage 421 is implementation specific and is determined by the desired isolation frequency. For example, if the actual vibratory force $F \cdot \sin(\omega t)$, generated by the transmission and propulsion system of an aircraft, is different than the predicted vibratory force or there is a variance in the stiffness $K$ of upper and lower elastomer members 413 and 415 of vibration isolator 401, then vibration isolator 401 is configured so that inertia track 419 can be removed and replaced with a different inertia track 419 having a tuning passage 421 sized to provide an isolation frequency that cancels the actual vibratory force.

Inertia track 419 includes an upper seal 431 and a lower seal 433, each configured to mate against an upper portion 435 and lower portion 437 of piston spindle 411, respectively, so as to create a seal and prevent leakage of tuning fluid 423. Furthermore, an inner diameter surface of upper portion 435 of piston spindle 411 is narrower than an inner diameter surface of lower portion 437 of piston spindle. Consequently, the inertia track surface associated with upper seal 431 is narrower than the inertia track surface associated with lower seal 433. Such a geometric configuration prevents upper seal 431 and lower seal 433 from sliding against the entire length of the inner surfaces of piston spindle 411 during installation.

Referring now to Figure 8, a method 801 of optimizing the isolation frequency of a vibration isolator is illustrated. Method 801 includes a step 803 of configuring a vibration isolator, such as vibration isolator 401 (shown in Figures 4-6), with a first inertia track, such as inertia track 419. As disclosed further herein, inertia track 419 includes a tuning passage 421 that affects the isolation frequency of the vibration isolator. Method 801 further includes a step 803 of determining if the first inertia track is providing an optimal isolation frequency. More specifically, step 803 can include measuring any vibration that is not cancelled by the vibration isolator and further analytically determining if the size of the tuning passage should be changed to more optimally cancel vibratory forces generated by the vibrating body. Method 801 further includes a step 805 of optimizing the vibration isolator by replacing the first inertia track with a second inertia track. In some embodiments, a variety of inertia tracks can be stocked so that the first inertia track can be quickly replaced. The tuning passage of the first inertia track may be machined to increase the diameter and reinstalled in the vibration isolator. Steps 805 and 807 can be iteratively performed until the vibration isolator is functioning at the optimal isolation frequency.

The system of the present invention provides significant advantages, including: (1) providing a vibration isolator that is configured for efficient tuning to an optimal frequency by removing and replacing the inertia track; and (2) providing a vibration isolator with a removable inertia track so that the tuning port can be machined externally so as to prevent contamination of the vibration isolator during machining.

## Claims

1.  A vibration isolator (401), comprising:

    an upper housing (403) and a lower housing (405);
    an upper reservoir housing (427) defining a upper fluid chamber (407);
    a removable lower reservoir housing (429) defining a lower fluid chamber (409);
    a piston spindle (411) resiliently coupled to the upper housing with an upper elastomer member (413), the piston spindle being resiliently coupled to the lower housing with a lower elastomer member (415);
    an inertia track (419) having a tuning passage (421), the inertia track being removably coupled to the piston spindle (411);
    a tuning fluid (423) disposed within the upper fluid chamber (407), the lower fluid chamber (409), and the tuning passage (421);
    wherein the vibration isolator cancels vibratory forces at an isolation frequency ($f_i$), the isolation frequency being at least partially dependent upon a size of the tuning passage;
    **characterized in that** the inertia track (419) is secured directly to the piston spindle with a removable fastener (425a-425d) external to the upper housing and the lower housing, wherein the inertia track is removable from the isolator once the fastener and the lower reservoir housing have been removed, by removing the inertia track through the space created by the removal of the lower reservoir housing.

2.  The vibration isolator according to claim 1, wherein the upper elastomer member (413) and the lower elastomer member (415) include alternating layers of elastomer material and rigid shim members.

3.  The vibration isolator according to claim 1 or claim 2, further comprising:

    an upper seal (431) associated with an upper portion of the inertia track.

4.  The vibration isolator according to claim 1 or any preceding claim, further comprising:

    a lower seal (433) associated with a lower portion of the inertia track.

5.  The vibration isolator according to claim 1, or any preceding claim, wherein the inertia track (419) has a first outer diameter approximate an upper portion (435) that is smaller than a second outer diameter approximate a lower portion (437).

6.  The vibration isolator according to claim 1, or any preceding claim, wherein the piston spindle (411) is configured for coupling to a vibrating body, and optionally or preferably
wherein the vibrating body is at least one of an aircraft engine, an aircraft transmission, an aircraft propeller, or an aircraft rotor.

**7.** The vibration isolator according to claim 1 or any preceding claim, wherein the piston spindle is configured for coupling to a pylon assembly of an aircraft.

**8.** The vibration isolator according to claim 1 or any preceding claim, wherein the tuning fluid has a low viscosity and a high density.

**9.** The vibration isolator according to claim 1 or any preceding claim, further comprising:

a plurality of studs (417) rigidly attaching the upper housing to the lower housing, and optionally or preferably wherein the plurality of studs each extends through apertures in the piston spindle.

**10.** A method of changing an isolation frequency in a vibration isolator (401), the vibration isolator having a removable lower reservoir housing defining a lower fluid chamber, the method comprising:

configuring (803) a vibration isolator with a first inertia track (419), the first inertia track having a first tuning passage (421);
determining (805) if the first inertia track is providing an optimal isolation frequency;
optimizing (807) the vibration isolator by replacing the first inertia track with a second inertia track having a second tuning passage
**characterized in that** the first inertia track (419) is secured within the vibration isolator by fasteners (425a-425d) externally accessible to an upper and lower housing of the vibration isolator, and wherein the optimizing of the vibration isolator by replacing the first inertia track includes:

removing the fasteners and the lower reservoir housing; and
removing the first inertia track from the isolator through the space created by the removal of the lower reservoir housing while the one or more fasteners and the lower reservoir housing are removed.

**11.** The method according to claim 10, wherein the step of determining if the first inertia track is providing an optimal isolation frequency includes measuring any vibration that is being transferring from a vibrating body, through the vibration isolator, and into an isolated body.

**12.** The method according to claim 10 or claim 11, wherein the second tuning passage has a larger diameter than the first tuning passage.

**13.** The method according to claim 10 or claim 11, wherein the second tuning passage has a smaller diameter than the first tuning passage.

**14.** The method according to any of claims 10 to 13, wherein the step of optimizing the vibration isolator by replacing the first inertia track with a second inertia track having a second tuning passage includes removing the fasteners that attach the first inertia track to a piston spindle in the vibration isolator.

**Patentansprüche**

**1.** Ein Schwingungsdämpfer (401), der Folgendes aufweist:

ein oberes Gehäuse (403) und ein unteres Gehäuse (405);
ein oberes Sammelbehältergehäuse (427), das eine obere Flüssigkeitskammer (407) definiert;
ein abnehmbares unteres Sammelbehältergehäuse (429), das eine untere Flüssigkeitskammer (409) definiert;
eine Kolbenspindel (411), die elastisch mit dem oberen Gehäuse über ein oberes elastomeres Teil (413) verbunden ist, und die Kolbenspindel, die flexibel mit dem unteren Gehäuse über ein unteres elastomeres Teil (415) verbunden ist;
eine Trägheitsführung (419) mit einem Einstelldurchlass (421), wobei die Trägheitsführung abnehmbar mit der Kolbenspindel (411) verbunden ist;

eine Einstellflüssigkeit (423), die in der oberen Flüssigkeitskammer (407), der unteren Flüssigkeitskammer (409) und dem Einstelldurchlass (421) enthalten ist;

wobei der Schwingungsdämpfer die Schwingungskräfte in einer Isolationsfrequenz ($f_i$) auflöst, die Isolationsfrequenz ist dabei mindestens teilweise abhängig von einer Größe des Einstelldurchlasses;

**dadurch gekennzeichnet, dass** die Trägheitsführung (419) direkt an der Kolbenspindel mit einem abnehmbaren Befestigungselement (425a-425d) außen am oberen Gehäuse und am unteren Gehäuse befestigt ist, wobei die Trägheitsführung vom Dämpfer abgenommen werden kann, sobald das Befestigungselement und das untere Sammelbehältergehäuse entfernt wurden, indem die Trägheitsführung durch den Raum herausgenommen wird, der durch das Entfernen des unteren Sammelbehältergehäuses entstanden ist.

2. Der Schwingungsdämpfer gemäß Anspruch 1, wobei das obere elastomere Teil (413) und das untere elastomere Teil (415) abwechselnde Schichten elastomeren Materials und starre Trimmelemente einschließt.

3. Der Schwingungsdämpfer gemäß Anspruch 1 oder Anspruch 2, der darüberhinaus Folgendes aufweist:

eine obere Dichtung (431), die mit einem oberen Teil der Trägheitsführung verbunden ist.

4. Der Schwingungsdämpfer gemäß Anspruch 1 oder eines der vorhergehenden Ansprüche, der darüberhinaus Folgendes aufweist:

eine untere Dichtung (433), verbunden mit einem unteren Teil der Trägheitsführung.

5. Der Schwingungsdämpfer gemäß Anspruch 1 oder eines der vorhergehenden Ansprüche, wobei die Trägheitsführung (419) einen ersten Außendurchmesser nahe des oberen Teils (435) aufweist, der kleiner ist als ein zweiter Außendurchmesser nahe des unteren Teils (437).

6. Der Schwingungsdämpfer gemäß Anspruch 1 oder eines der vorhergehenden Ansprüche, wobei die Kolbenspindel (411) so gestaltet ist, dass sie sich mit einem Schwingungskörper verbindet, und optional oder vorzugsweise wobei der Schwingungskörper mindestens entweder ein Flugzeugtriebwerk, ein Flugzeuggetriebe, ein Flugzeugpropeller oder ein Flugzeugrotor ist.

7. Der Schwingungsdämpfer gemäß Anspruch 1 oder eines der vorhergehenden Ansprüche, wobei die Kolbenspindel so gestaltet ist, dass sie sich mit einer Pylonen-Anordnung eines Flugzeugs verbindet.

8. Der Schwingungsdämpfer gemäß Anspruch 1 oder eines der vorhergehenden Ansprüche, wobei die Einstellflüssigkeit eine niedrige Viskosität und hohe Dichte aufweist.

9. Der Schwingungsdämpfer gemäß Anspruch 1 oder eines der vorhergehenden Ansprüche, der darüberhinaus Folgendes aufweist:

eine Vielzahl von Bolzen (417), die das obere Gehäuse starr mit dem unteren Gehäuse verbinden, und optional oder vorzugsweise
wobei die Vielzahl der Bolzen jeweils durch Öffnungen in der Kolbenspindel verläuft.

10. Ein Verfahren zur Änderung einer Isolationsfrequenz in einem Schwingungsdämpfer (401), der Schwingungsdämpfer hat dabei ein abnehmbares unteres Sammelbehältergehäuse, das eine untere Flüssigkeitskammer definiert, das Verfahren weist dabei Folgendes auf:

die Konfigurierung (803) eines Schwingungsdämpfers mit einer ersten Trägheitsführung (419), wobei die erste Trägheitsführung einen ersten Einstelldurchlass (421) hat;
die Bestimmung (805), ob die erste Trägheitsführung eine optimale Isolationsfrequenz bietet;
die Optimierung (807) des Schwingungsdämpfers durch Ersetzen der ersten Trägheitsführung durch eine zweite Trägheitsführung mit einem zweiten Einstelldurchlass,
**dadurch gekennzeichnet, dass** die erste Trägheitsführung (419) innerhalb des Schwingungsdämpfers mit den Befestigungselementen (425a-425d) befestigt ist, die von außen über ein oberes und unteres Gehäuse des Schwingungsdämpfers zugänglich sind, und wobei die Optimierung des Schwingungsdämpfers durch den Austausch der ersten Trägheitsführung Folgendes einschließt:

das Entfernen der Befestigungselemente und des unteren Sammelbehältergehäuses; und

das Entfernen der ersten Trägheitsführung aus dem Dämpfer durch den Raum, der durch das Entfernen des unteren Sammelbehältergehäuses entstanden ist, sobald das eine oder die mehreren Befestigungselemente und das untere Sammelbehältergehäuse entfernt wurden.

11. Das Verfahren gemäß Anspruch 10, wobei der Schritt zur Bestimmung, ob die erste Trägheitsführung eine optimale Isolationsfrequenz bietet, das Messen aller Schwingungen einschließt, die über einen Schwingungskörper, durch den Schwingungsdämpfer, in einen Isolationskörper übertragen werden.

12. Das Verfahren gemäß Anspruch 10 oder Anspruch 11, wobei der zweite Einstelldurchlass einen größeren Durchmesser als der erste Einstelldurchlass aufweist.

13. Das Verfahren gemäß Anspruch 10 oder Anspruch 11, wobei der zweite Einstelldurchlass einen kleineren Durchmesser als der erste Einstelldurchlass hat.

14. Das Verfahren gemäß eines der Ansprüche 10 bis 13, wobei der Schritt der Optimierung des Schwingungsdämpfers, durch Ersetzen der ersten Trägheitsführung durch eine zweite Trägheitsführung mit einem zweiten Einstelldurchlass, das Entfernen der Befestigungselemente einschließt, die die erste Trägheitsführung mit einer Kolbenspindel im Schwingungsdämpfer verbinden.

## Revendications

1. Un amortisseur de vibrations (401), comprenant :

un logement supérieur (403) et un logement inférieur (405),

un logement de réservoir supérieur (427) définissant une chambre fluidique supérieure (407),

un logement de réservoir inférieur amovible (429) définissant une chambre fluidique inférieure (409),

une tige de piston (411) couplée de manière élastique au logement supérieur avec un élément élastomère supérieur (413), la tige de piston étant couplée de manière élastique au logement inférieur avec un élément élastomère inférieur (415),

une piste d'inertie (419) possédant un conduit de réglage (421), la piste d'inertie étant couplée de manière amovible à la tige de piston (411),

un fluide de réglage (423) disposé à l'intérieur de la chambre fluidique supérieure (407), de la chambre fluidique inférieure (409) et du conduit de réglage (421),

où l'amortisseur de vibrations annule des forces vibratoires à une fréquence d'amortissement $(f_i)$, le fréquence d'amortissement dépendant au moins partiellement d'une taille du conduit de réglage,

**caractérisé en ce que** la piste d'inertie (419) est fixée directement à la tige de piston avec un dispositif de fixation amovible (425a-425d) externe au logement supérieur et au logement inférieur, où la piste d'inertie est amovible de l'amortisseur une fois que le dispositif de fixation et le logement de réservoir inférieur ont été retirés, par le retrait de la piste d'inertie au travers de l'espace créé par le retrait du logement de réservoir inférieur.

2. L'amortisseur de vibrations selon la Revendication 1, où l'élément élastomère supérieur (413) et l'élément élastomère inférieur (415) comprennent des couches alternées de matériau élastomère et d'éléments cales de réglage rigides.

3. L'amortisseur de vibrations selon la Revendication 1 ou 2, comprenant en outre :

un joint d'étanchéité supérieur (431) associé à une partie supérieure de la piste d'inertie.

4. L'amortisseur de vibrations selon la Revendication 1 ou selon l'une quelconque des Revendications précédentes, comprenant en outre :

un joint d'étanchéité inférieur (433) associé à une partie inférieure de la piste d'inertie.

5. L'amortisseur de vibrations selon la Revendication 1, ou selon l'une quelconque des Revendications précédentes, où la piste d'inertie (419) possède un premier diamètre extérieur à proximité d'une partie supérieure (435) qui est plus petit qu'un deuxième diamètre extérieur à proximité d'une partie inférieure (437).

**6.** L'amortisseur de vibrations selon la Revendication 1, ou selon l'une quelconque des Revendications précédentes, où la tige de piston (411) est configurée de façon à se coupler à un corps en vibration, et éventuellement ou de préférence
où le corps en vibration est au moins un élément parmi un moteur d'aéronef, une transmission d'aéronef, une hélice d'aéronef ou un rotor d'aéronef.

**7.** L'amortisseur de vibrations selon la Revendication 1 ou selon l'une quelconque des Revendications précédentes, où la tige de piston est configurée de façon à se coupler à un ensemble pylône d'un aéronef.

**8.** L'amortisseur de vibrations selon la Revendication 1 ou selon l'une quelconque des Revendications précédentes, où le fluide de réglage possède une viscosité faible et une densité élevée.

**9.** L'amortisseur de vibrations selon la Revendication 1 ou selon l'une quelconque des Revendications précédentes, comprenant en outre :

une pluralité de goujons (417) fixant de manière rigide le logement supérieur au logement inférieur, et éventuellement ou de préférence
où chaque goujon de la pluralité de goujons s'étend au travers d'ouvertures dans la tige de piston.

**10.** Un procédé de modification d'une fréquence d'amortissement dans un amortisseur de vibrations (401), l'amortisseur de vibrations possédant un logement de réservoir inférieur amovible définissant une chambre fluidique inférieure, le procédé comprenant :

la configuration (803) d'un amortisseur de vibrations avec une première piste d'inertie (419), la première piste d'inertie possédant un premier conduit de réglage (421),
la détermination (805) si la première piste d'inertie fournit une fréquence d'amortissement optimale,
l'optimisation (807) de l'amortisseur de vibrations par le remplacement de la première piste d'inertie par une deuxième piste d'inertie possédant un deuxième conduit de réglage,
**caractérisé en ce que** la première piste d'inertie (419) est fixée à l'intérieur de l'amortisseur de vibrations par des dispositifs de fixation (425a-425d) extérieurement accessibles à un logement inférieur et supérieur de l'amortisseur de vibrations, et où l'optimisation de l'amortisseur de vibrations par le remplacement de la première piste d'inertie comprend :

le retrait des dispositifs de fixation et du logement de réservoir inférieur, et
le retrait de la première piste d'inertie de l'amortisseur au travers de l'espace créé par le retrait du logement de réservoir inférieur pendant que les un ou plusieurs dispositifs de fixation et le logement de réservoir inférieur sont retirés.

**11.** Le procédé selon la Revendication 10, où l'opération de détermination si la première piste d'inertie fournit une fréquence d'amortissement optimale comprend la mesure de toute vibration qui est transférée d'un corps en vibration, au travers de l'amortisseur de vibrations, dans un corps isolé.

**12.** Le procédé selon la Revendication 10 ou 11, où le deuxième conduit de réglage possède un diamètre supérieur à celui du premier conduit de réglage.

**13.** Le procédé selon la Revendication 10 ou 11, où le deuxième conduit de réglage possède un diamètre inférieur à celui du premier conduit de réglage.

**14.** Le procédé selon l'une quelconque des Revendications 10 à 13, où l'opération d'optimisation de l'amortisseur de vibrations par le remplacement de la première piste d'inertie par une deuxième piste d'inertie possédant un deuxième conduit de réglage comprend le retrait des dispositifs de fixation qui rattachent la première piste d'inertie à une tige de piston dans l'amortisseur de vibrations.

FIG. 1

FIG. 2A

FIG. 2B

FIG. 3

427

401

403

439

411

417

441

405

429

**FIG. 4**

**FIG. 5**

**FIG. 6**

**FIG. 7**

**FIG. 8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4236607 A
- US 5439082 A
- US 6009983 A
- US 5435531 A
- US 5704596 A
- US 6695106 B
- US 20090289472 A, Catanzarite